# EUROPÄISCHE PATENTANMELDUNG

(11) **EP 3 163 740 A2**
(43) Veröffentlichungstag der Anmeldung: **03.05.2017**
(21) Anmeldenummer: 16194374.1
(22) Anmeldetag: 18.10.2016
(51) Int. Cl.: H02P 5/68, H02P 6/04

(54) **ELEKTRISCHE ANORDNUNG UND VERFAHREN ZUM ANSTEUERN WENIGSTENS ZWEIER ELEKTROMOTOREN**

(30) Priorität: 26.10.2015 DE 102015220854
(71) Anmelder: Brose Fahrzeugteile GmbH & Co. Kommanditgesellschaft, Bamberg, 96052 Bamberg (DE)
(72) Erfinder: Schindhelm, Thomas, 96524 Neuhaus-Schierschnitz (DE); Franek, Stefan, 96269 Großheirath (DE); Naumann, Guido, 35108 Allendorf (DE); Thomann, Christian, 96138 Burgebrach (DE)
(74) Vertreter: Maikowski & Ninnemann Patentanwälte Partnerschaft mbB

(57) **Zusammenfassung**

Die Erfindung betrifft insbesondere eine elektrische Anordnung (1), die zum Ansteuern wenigstens zweier Elektromotoren (11, 12) wenigstens eine erste H-Brückenanordnung (1-1) und eine zweite H-Brückenanordnung (1-2) aufweist. Die elektrische Anordnung (1) umfasst einen ersten Elektromotor (11), der mit einem ersten Schaltelement (131), einem zweiten Schaltelement (132), einem dritten Schaltelement (141) und einem vierten Schaltelement (142) in der ersten H-Brückenanordnung (1-1) elektrisch verbunden ist. Dabei ist der erste Elektromotor (11) in einem ersten Brückenzweig (1-10) der ersten H-Brückenanordnung (1-1) angeordnet und über einen ersten Motorkontakt (111) an eine erste Halbbrücke (13) angeschlossen, wobei die erste Halbbrücke (13) das erste Schaltelement (131) und das zweite Schaltelement (132) umfasst. Über einen zweiten Motorkontakt (112) ist der erste Elektromotor (11) an eine zweite Halbbrücke (14) angeschlossen ist, die das dritte Schaltelement (141) und das vierte Schaltelement (142) umfasst. Die elektrische Anordnung (1) umfasst ferner einen zweiten Elektromotor (12), der in einem zweiten Brückenzweig (1-20) der zweiten H-Brückenanordnung (1-2) angeordnet ist und über einen dritten Motorkontakt (121) an eine dritte Halbbrücke (15) angeschlossen ist, wobei die dritte Halbbrücke (15) ein fünftes Schaltelement (151) und ein sechstes Schaltelement (152) umfasst. Dabei ist der zweite Elektromotor (12) über einen vierten Motorkontakt (122) derart an die erste Halbbrücke (13) angeschlossen, dass er mit dem ersten Schaltelement (131), dem zweiten Schaltelement (132), dem fünften Schaltelement (151) und dem sechsten Schaltelement (152) in der zweiten H-Brückenanordnung (1-2) elektrisch verbunden ist.

## Beschreibung

Die Erfindung betrifft eine elektrische Anordnung nach dem Oberbegriff des Anspruchs 1 sowie ein Verfahren nach dem Oberbegriff des Anspruchs 7.

Eine derartige elektrische Anordnung weist zum Ansteuern wenigstens zweier Elektromotoren wenigstens eine erste H-Brückenanordnung (auch als Vollbrückenanordnung bezeichnet) und eine zweite H-Brückenanordnung auf und umfasst einen ersten Elektromotor, der mit einem ersten Schaltelement, einem zweiten Schaltelement, einem dritten Schaltelement und einem vierten Schaltelement in der ersten H-Brückenanordnung elektrisch verbunden ist. Dabei ist der erste Elektromotor in einem ersten Brückenzweig der ersten H-Brückenanordnung angeordnet. Bei dem ersten Elektromotor kann es sich beispielsweise um einen Verstellmotor einer Fensterhebervorrichtung eines Kraftfahrzeugs handeln. Dieser kann beispielsweise im Rahmen der elektrischen Anordnung mittels Pulsweitenmodulation angesteuert werden und zu diesem Zweck mit den ersten, zweiten, dritten und vierten Schaltelementen in der H-Brückenanordnung verschaltet sein.

Bei den Schaltelementen kann es sich beispielsweise um Halbleitertransistoren, insbesondere MOSFETs und/oder oder IGBTs, handeln.

Der erste Elektromotor ist dabei über einen ersten Motorkontakt an eine erste Halbbrücke angeschlossen, wobei die erste Halbbrücke das erste Schaltelement und das zweite Schaltelement umfasst. Über einen zweiten Motorkontakt ist der erste Elektromotor zudem an eine zweite Halbbrücke angeschlossen, die das dritte Schaltelement und das vierte Schaltelement umfasst.

Ferner umfasst die elektrische Anordnung mindestens einen zweiten Elektromotor, der in einem zweiten Brückenzweig der zweiten H-Brückenanordnung angeordnet ist. Dabei ist der zweite Elektromotor über einen dritten Motorkontakt an eine dritte Halbbrücke angeschlossen, welche ein fünftes Schaltelement und ein sechstes Schaltelement umfasst.

Bei dem zweiten Elektromotor kann es sich beispielsweise um einen zweiten Verstellmotor einer Fensterhebervorrichtung in einem Kraftfahrzeug handeln. So kann der erste Verstellmotor beispielsweise zum Verstellen einer Fensterscheibe einer linken Fahrzeugtür angeordnet sein, und der zweite Elektromotor kann zum Verstellen einer Fensterscheibe einer rechten Fahrzeugtür angeordnet sein. Ferner kann der erste Verstellmotor beispielsweise zum Verstellen einer Fensterscheibe einer vorderen Fahrzeugtür angeordnet sein, während der zweite Elektromotor zum Verstellen einer Fensterscheibe einer hinteren Fahrzeugtür angeordnet sein kann. Es kann dabei von einem Benutzer erwünscht sein, die beiden Elektromotoren derart anzusteuern, dass die Fensterscheibe an der linken bzw. vorderen Fahrzeugtür angehoben wird, während die Fensterscheibe an der rechten bzw. hinteren Fahrzeugtür abgesenkt wird oder umgekehrt.

Es ist bekannt, bei einer elektrischen Anordnung der eingangs beschriebenen Art zur Ansteuerung des ersten Elektromotors einerseits und des zweiten Elektromotors andererseits zwei separate H-Brückenanordnungen vorzusehen. Demnach ist der zweite Elektromotor mit einem vierten Motorkontakt an eine vierte Halbbrücke, welche ein siebtes Schaltelement und ein achtes Schaltelement umfasst, angeschlossen. Nachteilig ist bei der vorbekannten Lösung, dass zum Ansteuern zweier Elektromotoren insgesamt mindestens acht Schaltelemente erforderlich sind. Dabei ist zu beachten, dass jedes Schaltelement einerseits an sich mit Kosten und Gewicht verbunden ist und andererseits wertvollen Bauraum, beispielsweise auf einer Leiterplatte, in Anspruch nimmt.

Der Erfindung liegt die Aufgabe zugrunde, eine elektrische Anordnung der eingangs genannten Art im Hinblick auf ihre Herstellungskosten, ihr Gewicht und/oder den benötigten Bauraum zu verbessern.

Diese Aufgabe wird erfindungsgemäß durch eine elektrische Anordnung mit den Merkmalen des Anspruchs 1 sowie durch ein Verfahren mit den Merkmalen des Anspruchs 7 gelöst.

Danach ist der zweite Elektromotor über einen vierten Motorkontakt derart an die erste Halbbrücke angeschlossen, dass er mit dem ersten Schaltelement, dem zweiten Schaltelement, dem fünften Schaltelement und dem sechsten Schaltelement in der zweiten H-Brückenanordnung elektrisch verbunden ist. Auf diese Weise bildet die erste Halbbrücke einerseits zusammen mit der zweiten Halbbrücke die erste H-Brückenanordnung, die in dem ersten Brückenzweig den ersten Elektromotor umfasst, und andererseits zusammen mit der dritten Halbbrücke die zweite H-Brückenanordnung mit dem zweiten Elektromotor, der in dem zweiten Brückenzweig angeordnet ist. Somit bildet die erste Halbbrücke zugleich jeweils einen Teil der ersten H-Brückenanordnung und der zweiten H-Brückenanordnung aus.

Die erfindungsgemäße elektrische Anordnung ermöglicht ein unabhängiges Ansteuern des ersten Elektromotors und des zweiten Elektromotors. Dabei kommt die elektrische Anordnung mit insgesamt nur sechs Schaltelementen aus, sodass gegenüber vorbekannten Lösungen zwei Schaltelemente eingespart werden. Die Herstellungskosten einer elektrischen Anordnung zum unabhängigen Ansteuern zweier Elektromotoren, beispielsweise zweier Verstellmotoren einer Fensterhebervorrichtung für ein Kraftfahrzeug, können auf diese Weise reduziert werden. Zudem kann durch die Einsparung zweier Schaltelemente Gewicht eingespart werden, und wertvoller Bauraum, beispielsweise auf einer Leiterplatte, kann anderweitig genutzt oder eingespart werden.

In einer bevorzugten Ausführungsform der erfindungsgemäßen elektrischen Anordnung ist jedes der Schaltelemente in Abhängigkeit je eines Steuersignals in einen geschlossenen Zustand und in einen geöffneten Zustand schaltbar. Unter dem geöffneten Zustand ist dabei ein Zustand zu verstehen, in welchem das Schaltelement eingerichtet ist, zumindest in eine Vorwärtsrichtung eine Spannung zu sperren und keinen oder im Wesentlichen keinen Strom zu leiten. Demgegenüber ist das Schaltelement in dem geschlossenen Zustand in der Lage einen Strom in die Vorwärtsrichtung vergleichsweise gut zu leiten.

Insbesondere können die Schaltelemente mindestens einen Halbleitertransistor, beispielsweise einen MOSFET oder einen anderen Feldeffekttransistor (FET) umfassen. Dabei kann der geöffnete Zustand einem hochohmigen Zustand und der geschlossene Zustand einem vergleichsweise niederohmigen Zustand des MOSFET entsprechen. Eine Gate-Spannung, die als Steuersignal an einem Gate-Anschluss des MOSFET anliegt, kann ein Umschalten von dem geöffneten Zustand in den geschlossenen Zustand oder umgekehrt bewirken. Dabei ist auch denkbar, dass die Schaltelemente mindestens einen bipolaren Halbleitertransistor, insbesondere einen IGBT, umfassen. Auch in diesem Fall kann ein Umschalten von einem sperrenden geöffneten Zustand in einen leitenden geschlossenen Zustand des IGBT oder umgekehrt durch ein Steuersignal in Form einer Gate-Spannung bewirkt werden.

Gemäß einer Weiterbildung umfasst die elektrische Anordnung mindestens eine Steuereinheit, die zum Erzeugen der Steuersignale für die Schaltelemente in Abhängigkeit von einer gewünschten Drehrichtung und/oder Drehzahl des ersten Elektromotors und/oder des zweiten Elektromotors ausgebildet ist. Bei einer derartigen Steuereinheit kann es sich beispielsweise um einen Mikrocontroller handeln, dessen Ausgänge zum Übermitteln der Steuersignale jeweils mit zugeordneten Steueranschlüssen der Schaltelemente verbunden sind. Beispielsweise kann ein solcher Mikrocontroller über Signaleingänge von Bedienelementen, welche zu diesem Zweck von einem Benutzer betätigt werden, Signale empfangen, die einer gewünschten Drehrichtung und/oder Drehzahl für jeden Elektromotor entsprechen. Diese Signale können durch den Mikrocontroller zum Ansteuern der Elektromotoren, insbesondere mittels Pulsweitenmodulation, in entsprechende Steuersignale übersetzt werden, welche an die Steueranschlüsse der Schaltelemente ausgegeben werden.

In einer bevorzugten Ausführungsform ist der erste Elektromotor und/oder der zweite Elektromotor ein Gleichstrommotor. Gleichstrommotoren sind zur Ansteuerung mittels der erfindungsgemäßen H-Brückenanordnung, insbesondere mit einem Verfahren der Pulsweitenmodulation, geeignet. Verstellmotoren, beispielsweise an einer Fensterhebervorrichtung für ein Kraftfahrzeug, können als Gleichstrommotoren ausgebildet sein.

Es liegt im Rahmen der Erfindung, dass der erste Elektromotor durch einen Stromfluss von dem ersten Motorkontakt zu dem zweiten Motorkontakt in eine Drehrichtung und durch einen Stromfluss von dem zweiten Motorkontakt zu dem ersten Motorkontakt in eine entgegengesetzte Drehrichtung antreibbar ist. Entsprechend kann der zweite Elektromotor durch einen Stromfluss von dem dritten Motorkontakt zu dem vierten Motorkontakt in eine Drehrichtung und durch einen Stromfluss von dem vierten Motorkontakt zu dem dritten Motorkontakt in eine entgegengesetzte Drehrichtung antreibbar sein. Beispielsweise kann ein Gleichstrommotor als erster Elektromotor derart in der erfindungsgemäßen elektrischen Anordnung angeordnet sein, dass er durch einen Stromfluss von dem ersten Motorkontakt zu dem zweiten Motorkontakt zu einem Rechtslauf angetrieben wird, wohingegen er durch einen entgegengesetzten Stromfluss von dem zweiten Motorkontakt zu dem ersten Motorkontakt zu einem Linkslauf angetrieben wird (oder umgekehrt). Entsprechendes gilt für den zweiten Elektromotor.

In einem zweiten Erfindungsaspekt wird eine elektrische Fensterhebervorrichtung für ein Kraftfahrzeug mit mindestens einem ersten Verstellmotor zum Verstellen einer ersten Fensterscheibe und mindestens einem zweiten Verstellmotor zum Verstellen einer zweiten Fensterscheibe vorgeschlagen. Dabei umfasst die elektrische Fensterhebervorrichtung mindestens eine erfindungsgemäße elektrische Anordnung mit dem mindestens einen ersten Verstellmotor als erstem Elektromotor und mit dem mindestens einen zweiten Verstellmotor als zweitem Elektromotor. Mittels der elektrischen Anordnung können beide Verstellmotoren unabhängig voneinander angesteuert werden, derart dass beispielsweise nur eine der Fensterscheiben in eine angehoben oder abgesenkt wird, dass beide Fensterscheiben zugleich in die angehoben oder abgesenkt werden, oder dass eine der Fensterscheiben angehoben wird und gleichzeitig die andere Fensterscheibe abgesenkt wird.

Ein dritter Erfindungsaspekt betrifft ein Verfahren zum Ansteuern wenigstens zweier Elektromotoren, insbesondere mittels Pulsweitenmodulation. Dabei wir eine elektrische Anordnung, die zum Ansteuern der Elektromotoren wenigstens eine erste H-Brückenanordnung und eine zweite H-Brückenanordnung aufweist, verwendet. Die elektrische Anordnung umfasst einen ersten Elektromotor, der in einem ersten Brückenzweig einer ersten H-Brückenanordnung angeordnet ist und mit einer ersten Halbbrücke und einer zweiten Halbbrücke in der ersten H-Brückenanordnung elektrisch verbunden ist. Zusätzlich umfasst die elektrische Anordnung einen zweiten Elektromotor, der in einem zweiten Brückenzweig einer zweiten H-Brückenanordnung angeordnet ist und mit der ersten Halbbrücke und einer dritten Halbbrücke in der zweiten H-Brückenanordnung elektrisch verbunden ist. Die erste Halbbrücke ist dabei gleichzeitig Teil der ersten H-Brückenanordnung und der zweiten H-Brückenanordnung. Dabei umfasst jede der Halbbrücken wenigstens zwei Schaltelemente.

Bei dem erfindungsgemäßen Verfahren wird der ersten Elektromotor durch Schalten der Schaltelemente der ersten Halbbrücke und der zweiten Halbbrücke angesteuert. Zusätzlich oder alternativ kann der zweite Elektromotor durch Schalten der Schaltelemente der ersten Halbbrücke und der dritten Halbbrücke angesteuert werden.

Insbesondere kann im Rahmen des erfindungsgemäßen Verfahrens zum Ansteuern der Elektromotoren eine elektrische Anordnung gemäß dem ersten und/oder gemäß dem zweiten Erfindungsaspekt verwendet werden. Dementsprechend beziehen sich im Rahmen dieser Offenbarung Merkmale, die im Zusammenhang mit der erfindungsgemäßen elektrischen Anordnung oder der erfindungsgemäßen elektrischen Fensterhebervorrichtung erläutert werden ebenso auf die bei dem erfindungsgemäßen Verfahren verwendete Vorrichtung und umgekehrt.

In einer bevorzugten Ausführungsform können die Halbbrücken mit einem ersten Versorgungsanschluss und mit einem zweiten Versorgungsanschluss elektrisch verbunden sein. Auf diese Weise kann beispielsweise eine Versorgungsspannung für die Elektromotoren zwischen dem ersten Versorgungsanschluss und dem zweiten Versorgungsanschluss angelegt werden. Ferner können die Halbbrücken jeweils in eine erste Halbbrückenstellung, in eine zweite Halbbrückenstellung und in eine dritte Halbbrückenstellung schaltbar sein. Dabei ist in der ersten Halbbrückenstellung dasjenige der Schaltelemente, welches innerhalb der jeweiligen Halbbrücke in einem elektrischen Pfad zwischen dem ersten Versorgungsanschluss und dem jeweils anderen der Schaltelemente angeordnet ist, geschlossen, wobei das andere der Schaltelemente geöffnet ist. Demgegenüber ist in der zweiten Halbbrückenstellung dasjenige der Schaltelemente, welches innerhalb der jeweiligen Halbbrücke in einem elektrischen Pfad zwischen dem zweiten Versorgungsanschluss und dem jeweils anderen der Schaltelemente angeordnet ist, geschlossen, wobei das andere der Schaltelemente geöffnet ist. In der dritten Halbbrückenstellung sind die Schaltelemente der jeweiligen Halbbrücke geöffnet. Selbstverständlich können in den betreffenden elektrischen Pfaden grundsätzlich weitere elektrische Bauelemente, beispielsweise Dioden oder Widerstände, angeordnet sein.

Zum Ansteuern der Elektromotoren kann die erste Halbbrücke in einer ersten Schaltsequenz periodisch für eine erste Pulsdauer in die erste Halbbrückenstellung und für eine zweite Pulsdauer in die zweite Halbbrückenstellung geschaltet werden. Je nach anzusteuerndem Elektromotor wird dabei zusätzlich die zweite Halbbrücke und/oder die dritte Halbbrücke geschaltet.

So kann die zweite Halbbrücke in einer zweiten Schaltsequenz zwischen der ersten Halbbrückenstellung, der zweiten Halbbrückenstellung und/oder der dritten Halbbrückenstellung geschaltet werden, um den ersten Elektromotor anzusteuern. Die dritte Halbbrücke kann zum Ansteuern des zweiten Elektromotors in einer dritten Schaltsequenz zwischen der ersten Halbbrückenstellung, der zweiten Halbrückenstellung und/oder der dritten Halbbrückenstellung geschaltet werden. Dabei können die zweite und dritte Schaltsequenz von gewünschten Drehrichtung und/oder Drehzahl des ersten bzw. zweiten Elektromotors abhängen. Durch die Wahl geeigneter zweiter und dritter Schaltsequenzen ist ein unabhängiges Ansteuern des ersten Elektromotors einerseits und des zweiten Elektromotors andererseits hinsichtlich ihrer Drehrichtung und Drehzahl möglich.

In einer Variante wird die zweite Halbbrücke zum Ansteuern des ersten Elektromotors derart, dass er in eine Drehrichtung angetrieben wird, für mehrere Periodendauern der ersten Schaltsequenz in ihre zweite Halbbrückenstellung geschaltet. Zusätzlich oder alternativ hierzu kann die zweite Halbbrücke für mehrere Periodendauern der ersten Schaltsequenz in ihre erste Halbbrückenstellung geschaltet werden, um den ersten Elektromotor in eine entgegengesetzte Drehrichtung anzutreiben. Entsprechend kann die dritte Halbbrücke für mehrere Periodendauern der ersten Schaltsequenz in ihre erste Halbbrückenstellung geschaltet werden, um den zweiten Elektromotor in eine Drehrichtung anzutreiben, und/oder für mehrere Periodendauern der ersten Schaltsequenz in ihre zweite Halbbrückenstellung geschaltet werden, um den zweiten Elektromotor in eine entgegengesetzte Drehrichtung anzutreiben.

Bezogen auf eine vorgegebenen ersten Schaltsequenz der ersten Halbbrücke lässt sich mit dieser Variante eine maximale mögliche Drehzahl des jeweiligen Elektromotors erzielen, da die jeweiligen Pulsdauern der ersten Schaltsequenz als Versorgungsphasen für den Antrieb der Elektromotoren komplett ausgenutzt werden.

Es ist jedoch auch möglich, eine Drehzahl für jeden Elektromotor unabhängig einzustellen. Zu diesem Zweck kann beispielsweise, um den ersten Elektromotor in eine Drehrichtung anzutreiben die zweite Halbbrücke periodisch in ihre zweite Halbbrückenstellung geschaltet werden, so dass die zweite Halbbrücke die zweite Hallbrückenstellung mindestens für eine dritte Pulsdauer einnimmt, während derer sich die erste Halbbrücke in ihrer ersten Halbbrückenstellung befindet. Alternativ oder zusätzlich kann die zweite Halbbrücke, um den ersten Elektromotor in eine entgegengesetzte Drehrichtung anzutreiben, periodisch in ihre erste Halbbrückenstellung geschaltet werden und diese jeweils mindestens für eine vierte Pulsdauer einnehmen, während derer sich die erste Halbbrücke in ihrer zweiten Halbbrückenstellung befindet.

Entsprechend kann die dritte Halbbrücke, um den zweiten Elektromotor in eine Drehrichtung anzutreiben, periodisch in ihre erste Halbbrückenstellung geschaltet werden, so dass die dritte Halbbrücke die erste Halbbrückenstellung jeweils mindestens für eine fünfte Pulsdauer einnimmt, während derer sich die erste Halbbrücke in ihrer zweiten Halbbrückenstellung befindet. Alternativ oder zusätzlich kann die dritte Halbbrücke, um den zweiten Elektromotor in eine entgegengesetzte Drehrichtung anzutreiben, periodisch in ihre zweite Halbbrückenstellung geschaltet werden und in dieser jeweils mindestens für eine sechste Pulsdauer verbleiben, während derer die erste Halbbrücke in ihrer ersten Halbbrückenstellung ist.

Zum Ermöglichen eines aktiven Freilaufs zwischen den Phasen, in welchen der jeweilige Elektromotor durch einen Stromfluss zwischen den Versorgungsanschlüssen angetrieben wird, können im Rahmen der zweiten und dritten Schaltsequenzen besondere Vorkehrungen getroffen werden. Wenn es sich bei den Schaltelementen beispielsweise um MOSFETs handelt, kann es sinnvoll sein, einzelne MOSFETs zeitweise einzuschalten, damit sie unter möglichst geringen Verlusten in Rückwärtsrichtung von einem Freilaufstrom durchflossen werden können.

Zu diesem Zweck kann die zweite Halbbrücke und/oder die dritte Halbbrücke periodisch in ihre erste Halbbrückenstellung geschaltet werden und diese einnehmen, während sich die erste Halbbrücke in ihrer ersten Halbbrückenstellung befindet. Mit anderen Worten kann vorgesehen sein, dass es einen zeitlichen Überlapp zwischen der erste Halbbrückenstellung der zweiten Halbbrücke und/oder der dritten Halbbrücke einerseits und der ersten Halbbrückenstellung der ersten Halbbrücke gibt. Alternativ oder zusätzlich kann die zweite Halbbrücke und/oder die dritte Halbbrücke periodisch in ihre zweite Halbbrückenstellung geschaltet werden und diese einnehmen, während sich die erste Halbbrücke in ihrer zweiten Halbbrückenstellung befindet, so dass es einen zeitlichen Überlapp zwischen der zweiten Halbbrückenstellung der zweiten Halbbrücke und/oder der dritten Halbbrücke einerseits und der zweiten Halbbrückenstellung der ersten Halbbrücke andererseits gibt.

Gemäß einer Variante wird eine Drehzahl des ersten Elektromotors durch Einstellen eines Verhältnisses der dritten Pulsdauer und/oder der vierten Pulsdauer zu einer Periodendauer der ersten Schaltsequenz gesteuert, wobei zusätzlich oder alternativ eine Drehzahl des zweiten Elektromotors durch Einstellen eines Verhältnisses der fünften Pulsdauer und/oder der sechsten Pulsdauer zu der Periodendauer der ersten Schaltsequenz gesteuert werden kann. Auf diese Weise wird eine unabhängige Steuerung des ersten Elektromotors und des zweiten Elektromotors mittels Pulsweitenmodulation ermöglicht.

Bevorzugt sind innerhalb der ersten Schaltsequenz die erste Pulsdauer und die zweite Pulsdauer im Wesentlichen gleich lang. Mit anderen Worten kann in einer bevorzugten Ausführungsform ein Verhältnis der ersten Pulsdauer zu der zweiten Pulsdauer insbesondere im Bereich von 0,9 bis 1,1 liegen. Auf diese Weise kann in einfacher Weise gewährleistet werden, dass die erste Schaltsequenz mit der zweiten und/oder dritten Schaltsequenz nicht außer Phase gerät.

Ein Verhältnis der ersten Pulsdauer zu einer Periodendauer der ersten Schaltsequenz und/oder ein Verhältnis der zweiten Pulsdauer zu der Periodendauer der ersten Schaltsequenz können bevorzugt jeweils im Bereich von 0,4 bis 0,6 liegen. Insbesondere können das Verhältnis der ersten Pulsdauer zu der Periodendauer der ersten Schaltsequenz und/oder das Verhältnis der zweiten Pulsdauer zu der Periodendauer der ersten Schaltsequenz im Wesentlichen 0,5 sein. Auf diese Weise wird für die Elektromotoren im zeitlichen Mittel eine möglichst große Versorgungsspannung bereitgestellt.

Es liegt auch im Rahmen der Erfindung, dass zum Umschalten der Halbbrücken aus ihrer jeweiligen ersten Halbbrückenstellung in ihre jeweilige zweite Halbbrückenstellung die jeweilige Halbbrücke zunächst von ihrer ersten Halbbrückenstellung in ihre dritte Halbbrückenstellung und anschließend aus ihrer dritten Halbbrückenstellung in ihre zweite Halbbrückenstellung geschaltet wird. Entsprechend kann zum Umschalten der Halbbrücken aus ihrer jeweiligen zweiten Halbbrückenstellung in ihre jeweilige erste Halbbrückenstellung die jeweilige Halbbrücke zunächst aus ihrer zweiten Halbbrückenstellung in ihre dritte Halbbrückenstellung und anschließend aus ihrer dritten Halbbrückenstellung in ihre erste Halbbrückenstellung geschaltet werden. Durch einen derartigen Schaltversatz beim Umschalten zwischen der ersten Halbbrückenstellung und der zweiten Halbbrückenstellung oder umgekehrt können Halbbrückenkurzschlüsse vermieden werden.

Weitere Einzelheiten und Vorteile der Erfindung werden bei der nachfolgenden Beschreibung von Ausführungsbeispielen anhand der Figuren deutlich werden.

Es zeigen:
- Figur 1: eine elektrische Anordnung gemäß dem Stand der Technik;
- Figur 2: eine erfindungsgemäße elektrische Anordnung;
- Figur 3: die elektrische Anordnung nach Fig. 2 mit einer Steuereinheit zum Erzeugen von Steuersignalen für die Schaltelemente; und
- Figuren 4A-H: Schaltsequenzen für die Halbbrücken der elektrischen Anordnung zum Ansteuern der Elektromotoren mittels Pulsweitenmodulation.

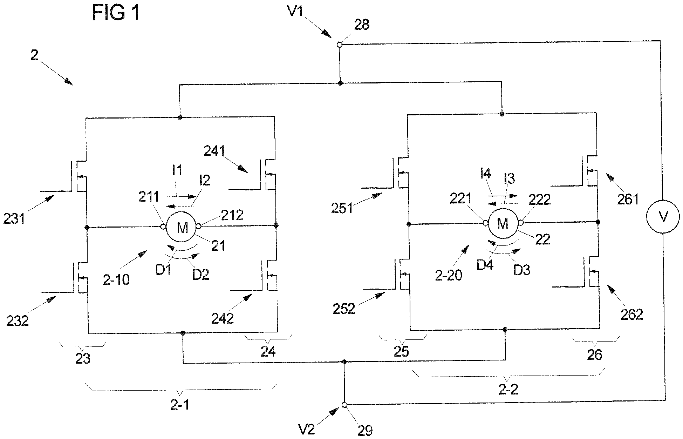

Die Figur 1 zeigt eine übliche elektrische Anordnung 2 zum Ansteuern zweier Elektromotoren 21, 22. Um ein unabhängiges Ansteuern der Elektromotoren 21, 22 hinsichtlich ihrer Drehrichtung D1, D2 und/oder Drehzahl zu ermöglichen, sind bei vorbekannten Lösungen zwei separate H-Brückenanordnungen 2-1, 2-2 vorgesehen.

Dabei ist ein erster Elektromotor 21 derart in einem ersten Brückenzweig 2-10 einer ersten H-Brückenanordnung 2-1 angeordnet, dass er über einen ersten Motorkontakt 211 an eine erste Halbbrücke 23 und über einen zweiten Motorkontakt 212 an eine zweite Halbbrücke 24 angeschlossen ist. Die erste Halbbrücke 2-1 umfasst ein erstes Schaltelement 231 und ein zweites Schaltelement 232, wobei der erste Motorkontakt 211 an einen elektrischen Pfad zwischen dem ersten Schaltelement 231 und dem zweiten Schaltelement 232 angeschlossen ist. Entsprechend umfasst die zweite Halbbrücke 24 ein drittes Schaltelement 241 und ein viertes Schaltelement 242, wobei der zweite Motorkontakt 212 an einen elektrischen Pfad zwischen dem dritten Schaltelement 241 und dem vierten Schaltelement 242 angeschlossen ist.

Analog zum Aufbau der ersten H-Brückenanordnung 2-1 ist ein zweiter Elektromotor 22 mit einem fünften Schaltelement 251, einem sechsten Schaltelement 252, einem siebten Schaltelement 261 und einem achten Schaltelement 262 in einer zweiten H-Brückenanordnung 2-2 elektrisch verbunden.

Zum Bereitstellen einer Versorgungsspannung V für die Elektromotoren 21, 22 sind ein erster Versorgungsanschluss 28 und ein zweiter Versorgungsanschluss 29 vorgesehen. Der erste Versorgungsanschluss 28 ist an einen elektrischen Pfad zwischen dem ersten Schaltelement 231 und den dritten Schaltelement 241 sowie an einen elektrischen Pfad zwischen dem fünften Schaltelement 251 und dem siebten Schaltelement 261 angeschlossen. Der zweite Versorgungsanschluss 29 ist an einen elektrischen Pfad zwischen dem zweiten Schaltelement 232 und dem vierten Schaltelement 242 sowie an einen elektrischen Pfad zwischen dem sechsten Schaltelement 252 und dem achten Schaltelement 262 angeschlossen. Bezüglich ihrer Anbindung an die Versorgungsanschlüsse 28, 29 sind die erste H-Brückenanordnung 2-1 und die zweite H-Brückenanordnung 2-2 folglich parallel geschaltet.

In der in Figur 1 dargestellten Ausführungsform einer vorbekannten elektrischen Anordnung 2 handelt es sich bei den Schaltelementen 231, 232, 241, 242, 251, 252, 261, 262 um MOSFETs, welche jeweils durch ein äußeres Gate-Spannungssignal in einen geschlossenen Zustand und in einen geöffneten Zustand schaltbar sind. Dabei entspricht der geöffnete Zustand einem hochohmigen Zustand, in welchem der jeweilige MOSFET in einer Vorwärtsrichtung zwischen einem Source-Anschluss und einem Drain-Anschluss nicht oder im Wesentlichen nicht leitfähig ist und zum Sperren einer äußeren Spannung in der Vorwärtsrichtung eingerichtet ist. Demgegenüber sind die MOSFETs in ihrem jeweiligen geschlossenen Zustand in Vorwärtsrichtung vergleichsweise gut leitfähig.

Durch geeignetes Schalten der Schaltelemente 231, 232, 241, 242, 251, 252, 261, 262 können der erste Elektromotor 21 und der zweite Elektromotor 22 jeweils in eine gewünschte Drehrichtung D1, D2 angetrieben werden, wobei mittels Pulsweitenmodulation zudem eine Drehzahl des jeweiligen Elektromotors 21, 22 einstellbar ist. Liegt beispielsweise an dem ersten Versorgungsanschluss 28 ein Potenzial V1 an, welches höher ist als ein an dem zweiten Versorgungsanschluss 29 anliegendes Potenzial V2, so wird der erste Elektromotor 21 durch einen Stromfluss I1 von dem ersten Motorkontakt 211 zu dem zweiten Motorkontakt 212 angetrieben, wenn das erste Schaltelement 231 und das vierte Schaltelement 242 zugleich geschlossen sind, während das zweite Schaltelement 232 und das dritte Schaltelement 241 geöffnet sind. Dadurch kann der erste Elektromotor 21 in eine Drehrichtung D1, beispielsweise zu einem Rechtslauf, angetrieben werden.

Dabei ist eine Drehzahl des rechtslaufenden ersten Elektromotors 21 mittels Pulsweitenmodulation einstellbar, indem das erste Schaltelement 231 und/oder das vierte Schaltelement 242 periodischen geschlossen und geöffnet werden. Eine resultierende Drehzahl des rechtslaufenden ersten Elektromotors 21 ist umso größer, je größer ein Verhältnis einer Pulsdauer, während derer das erste Schaltelement 231 und/oder das vierte Schaltelement 242 geschlossen sind, zu einer Periodendauer des Wechsels zwischen dem geschlossenen Zustand und dem geöffneten Zustand des ersten Schaltelements 231 und/oder des vierten Schaltelements 242 ist.

Um den ersten Elektromotor 21 zu einem Linkslauf anzutreiben, werden das zweite Schaltelement 232 und das dritte Schaltelement 241 jeweils zugleich in einem periodischen Wechsel geschlossen und geöffnet, während das erste Schaltelement 231 und das vierte Schaltelement 242 geöffnet sind. Wenn das zweite Schaltelement 232 und das dritte Schaltelement 241 geschlossen sind, treibt ein zweiter Stromfluss I2 von dem zweiten Motorkontakt 212 zu dem ersten Motorkontakt 211 den ersten Elektromotor 21 zu einem Linkslauf in eine entgegengesetzte Drehrichtung D2 an. Ein Einstellen einer Drehzahl des linkslaufenden ersten Elektromotors 21 kann dabei wiederum mittels Pulsweitenmodulation erfolgen.

Der zweite Elektromotor 22 ist in entsprechender Weise durch geeignetes Schalten der Schaltelemente 251, 252, 261, 262 der zweiten H-Brückenanordnung 2-2 hinsichtlich einer gewünschten Drehrichtung D1, D2 und/oder Drehzahl unabhängig von dem ersten Elektromotor 21 ansteuerbar.

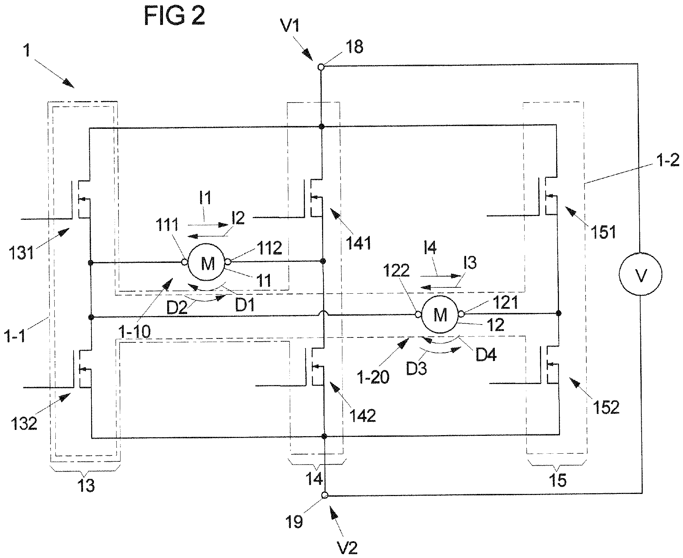

In Figur 2 ist eine erfindungsgemäße elektrische Anordnung 1 zum unabhängigen Ansteuern zweier Elektromotoren 11, 12 dargestellt. Bei den beiden Elektromotoren 11, 12 kann es sich beispielsweise um Gleichstrommotoren handeln, die in einer elektrischen Fensterhebervorrichtung eines Kraftfahrzeugs als Verstellmotoren für jeweils eine Fensterscheibe eingesetzt werden. Es kann dabei erforderlich sein, die Elektromotoren 11, 12 hinsichtlich ihrer Drehrichtung D1, D2, D3, D4 und/oder Drehzahl unabhängig voneinander zu anzusteuern, um beide Fensterscheiben unabhängig voneinander anzuheben bzw. abzusenken.

Die elektrische Anordnung 1 umfasst eine erste H-Brückenanordnung 1-1, die im Wesentlichen der ersten H-Brückenanordnung 2-1 aus Figur 1 entspricht. So ist ein erster Elektromotor 11 mit einem ersten Schaltelement 131, einem zweiten Schaltelement 132, einem dritten Schaltelement 141 und einem vierten Schaltelement 142 in der ersten H-Brückenanordnung 1-1 elektrisch verbunden, wobei der erste Elektromotor 11 in einem ersten Brückenzweig 1-10 der ersten H-Brückenanordnung 1-1 angeordnet ist. Der erste Elektromotor 11 ist über einen ersten Motorkontakt 111 an eine erste Halbbrücke 13 und über einen zweiten Motorkontakt 112 an eine zweite Halbbrücke 14 angeschlossen, wobei die erste Halbbrücke 13 das erste Schaltelement 131 und das zweite Schaltelement 132 umfasst, und wobei die zweite Halbbrücke 14 das dritte Schaltelement und 141 und das vierte Schaltelement 142 umfasst. Dabei ist der erste Motorkontakt 111 an einen elektrischen Pfad zwischen dem ersten Schaltelement 131 und dem zweiten Schaltelement 132 angeschlossen, und der zweite Motorkontakt 112 ist an einem elektrischen Pfad zwischen dem dritten Schaltelement 141 und dem vierten Schaltelement 142 angeschlossen.

Ferner ist ein zweiter Elektromotor 12 über einen dritten Motorkontakt 121 an eine dritte Halbbrücke 15 angeschlossen, die ein fünftes Schaltelement 151 und ein sechstes Schaltelement 152 umfasst. Dabei ist der dritte Motorkontakt 121 an einen elektrischen Pfad zwischen dem fünften Schaltelement 151 und dem sechsten Schaltelement 152 angeschlossen. Zudem ist der zweite Elektromotor 12 über einen vierten Motorkontakt 122 derart an die erste Halbbrücke 13 angeschlossen, dass er mit dem ersten Schaltelement 131, dem zweiten Schaltelement 132, dem fünften Schaltelement 151 und dem sechsten Schaltelement 152 in einer zweiten H-Brückenanordnung 1-2 elektrisch verbunden ist. Wie in Figur 2 gezeigt, ist der vierten Motorkontakt 122 zu diesem Zweck an einem elektrischen Pfad zwischen dem ersten Schaltelement 131 und den zweiten Schaltelement 132 angeschlossen.

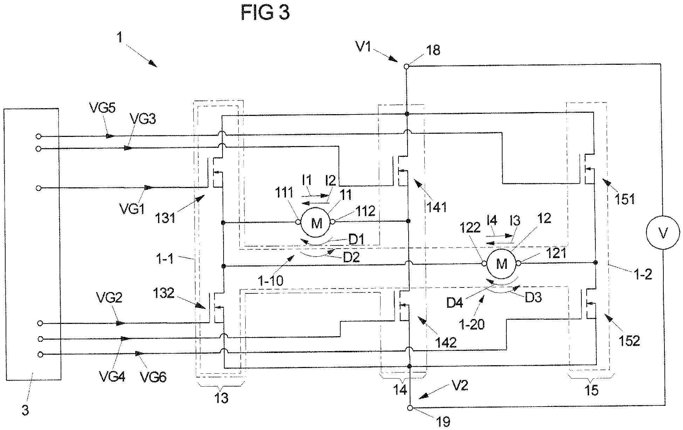

Die zweite H-Brückenanordnung 1-2, in deren zweitem Brückenzweig 1-20 der zweite Elektromotor 12 angeordnet ist, hat demnach mit der ersten H-Brückenanordnung 1-1, die den ersten Elektromotor 11 versorgt, die erste Halbbrücke 13 gemeinsam. Mit anderen Worten bildet die erste Halbbrücke 13 einerseits zusammen mit der zweiten Halbbrücke 14 und dem ersten Brückenzweig 1-10 die erste H-Brückenanordnung 1-1 und andererseits zusammen mit der dritten Halbbrücke 15 und dem zweiten Brückenzweig 1-20 die zweite H-Brückenanordnung 1-2. Insgesamt sind somit zwei funktionelle H-Brückenanordnungen 1-1, 1-2 (Bezugszeichen 1-2 fehlt in Figur 2 und 3) vorgesehen, mit welchen der erste Elektromotor 11 und der zweite Elektromotor 12 unabhängig voneinander ansteuerbar sind.

Dabei kommt die erfindungsgemäße elektrische Anordnung 1 mit nur sechs verschiedenen Schaltelementen 131, 132, 141, 142, 151, 152 aus und spart somit gegenüber der in der Figur 1 gezeigten vorbekannten Lösung zwei Schaltelemente ein. Die Herstellungskosten einer elektrischen Anordnung 1 zum unabhängigen Ansteuern zweier Elektromotoren 11, 12, beispielsweise zweier Verstellmotoren einer Fensterhebervorrichtung für ein Kraftfahrzeug, können auf diese Weise reduziert werden. Zudem kann durch die Einsparung zweier Schaltelemente Gewicht eingespart werden, und wertvoller Bauraum, beispielsweise auf einer Leiterplatte, kann anderweitig genutzt werden.

In dem Ausführungsbeispiel der Figur 2 handelt es sich bei den Schaltelementen 131, 132, 141, 142, 151, 152 um MOSFETs. In weiteren Ausführungsformen können die Schaltelemente 133, 132, 141, 142, 151, 152 andere Halbleitertransistoren, beispielsweise Bipolartransistoren und insbesondere IGBTs umfassen. Bevorzugt ist jedes der Schaltelemente 131, 132, 141, 142, 151, 152 in Abhängigkeit je eines Steuersignals VG1, VG2, VG3, VG4, VG5, VG6 in einen geschlossenen Zustand und in einen geöffneten Zustand schaltbar.

Die Figur 3 zeigt die elektrische Anordnung aus Figur 2, wobei zusätzlich eine Steuereinheit 3 zum Erzeugen der Steuersignale VG1, VG2, VG3, VG4, VG5, VG6 für die Schaltelemente 131, 132, 141, 142, 151, 152 vorgesehen ist. Die Steuereinheit 3 kann beispielsweise ein Mikrocontroller sein, welcher die Steuersignale VG1, VG2, VG3, VG4, VG5, VG6 in Abhängigkeit jeweils einer gewünschten Drehrichtung D1, D2, D3, D4 und/oder Drehzahl für jeden Elektromotor 11, 12 bereitstellt. Dabei kann die Steuereinheit 3 die Steuersignale VG1, VG2, VG3, VG4, VG5, VG6 beispielsweise aus Eingangssignalen berechnen, welche von mindestens einem Bedienelement einer elektrischen Fensterhebervorrichtung erzeugt werden.

Beispielsweise kann der erste Elektromotor 11 ein Verstellmotor zum Verstellen einer ersten Fensterscheibe an einer ersten Fahrzeugtür und der zweite Elektromotor 12 einen Verstellmotor zum Verstellen einer zweiten Fensterscheibe an einer zweiten Fahrzeugtür sein. Ein Benutzer kann dabei mittels eines oder mehrerer Bedienelemente, die beispielsweise im Innenraum des Kraftfahrzeugs angeordnet sind, die Verstellmotoren 11, 12 über die elektrische Anordnung 1 unabhängig voneinander Ansteuern. Beispielsweise kann der erste Verstellmotor 11 in die Drehrichtung D1 angetrieben werden und dadurch die erste Fensterscheibe anheben. Alternativ kann der erste Verstellmotor 11 zum Absenken der ersten Fensterscheibe in die entgegengesetzte Drehrichtung D2 angetrieben werden. Dabei kann das Antreiben des ersten Elektromotors 11 in die Drehrichtung D1 durch einen Stromfluss I1 von dem ersten Motorkontakt 111 zu dem zweiten Motorkontakt 112 erfolgen, und das Antreiben in die entgegengesetzte Drehrichtung D2 kann durch einen entgegengesetzten Stromfluss I2 von dem zweiten Motorkontakt 112 zu dem ersten Motorkontakt 111 erfolgen. Bei dem ersten Elektromotor 11 und/oder dem zweiten Elektromotor 12 kann es sich beispielsweise um einen Gleichstrommotor handeln.

Zeitgleich zum Antreiben des ersten Elektromotors 11 in die Drehrichtung D1 und/oder oder in die entgegengesetzte Drehrichtung D2 kann der zweite Elektromotor 12, beispielsweise zum Absenken der Fensterscheibe, durch einen Stromfluss I3 von dem dritten Motorkontakt 121 zu dem vierten Motorkontakt 122 in eine Drehrichtung D3 angetrieben werden. Alternativ hierzu kann der zweite Elektromotor 12, beispielsweise zum Anheben der zweiten Fensterscheibe, durch einen Stromfluss I4 von dem vierten Motorkontakt 122 zu dem dritten Motorkontakt 121 in eine entgegengesetzte Drehrichtung D4 angetrieben werden.

Dabei ermöglicht die elektrische Anordnung 1 auch ein unabhängiges Einstellen einer Drehzahl des jeweiligen Elektromotors 11, 12 mittels Pulsweitenmodulation.

Das unabhängige Ansteuern der beiden Elektromotoren 11, 12 mittels der elektrischen Anordnung aus Figuren 2 und 3 wird im Folgenden näher beschrieben.

Die Halbbrücken 11, 12, 13 der elektrischen Anordnung 1 sind jeweils in eine erste Halbbrückenstellung 13-1, 14-1, 15-1, in eine zweite Halbbrückenstellung 13-2, 14-2, 15-2 und in eine dritte Halbbrückenstellung 13-2, 14-2, 15-2 schaltbar. Dabei ist in der ersten Halbbrückenstellung 13-1, 14-1, 15-1 dasjenige der Schaltelemente 131, 141, 151, welches innerhalb der jeweiligen Halbbrücke 13, 14, 15 in einem elektrischen Pfad zwischen dem ersten Versorgungsanschluss 18 und dem jeweils anderen der Schaltelemente 132, 142, 152 angeordnet ist, geschlossen und das andere der Schaltelemente 132, 142, 152 geöffnet.

Über einen ersten Versorgungsanschluss 18 und einen zweiten Versorgungsanschluss 19, zwischen denen die Halbbrücken 13, 14 15 in einer Parallelschaltung angeordnet sind, kann eine Versorgungsspannung V für die Elektromotoren 11, 12 angelegt werden. Beispielsweise kann ein Potenzial V1, welches an dem ersten Versorgungsanschluss 18 anliegt, höher sein als ein zweites Potenzial V2, welches an dem zweiten Versorgungsanschluss 19 anliegt. So kann der erste Versorgungsanschluss 18 beispielsweise an einen Pluspol einer Autobatterie angeschlossen sein, und der zweite Versorgungsanschluss V2 kann beispielsweise eine Masse kontaktieren. Eine Differenz zwischen dem ersten Potenzial V1 dem zweiten Potenzial V2 bildet die Versorgungsspannung V.

In diesem Fall fungieren das erste Schaltelement 131, das dritte Schaltelement 141 und das fünfte Schaltelement 151, die in der jeweiligen Halbbrücke 13, 14, 15 auf einer dem ersten Versorgungsanschluss 18 zugewandten und dem zweiten Versorgungsanschluss 19 abgewandten Seite angeordnet sind, als High-Side-Schaltelemente. Demgegenüber fungieren das zweite Schaltelement 132, das vierte Schaltelement 142 und das sechste Schaltelement 152, welche auf einer dem ersten Versorgungsanschluss 18 abgewandten und dem zweiten Versorgungsanschluss 19 zugewandten Seite der jeweiligen Halbbrücke 13, 14, 15 angeordnet sind, als Low-Side-Schaltelemente. Dabei sind die Schaltelemente 131, 132, 141, 142, 151, 152, die im Ausführungsbeispiel als MOSFETs ausgebildet sind, derart ausgebildet und in den Halbbrücken 13, 14, 15 angeordnet, dass sie in ihrem jeweiligen geöffneten Zustand die Versorgungsspannung V sperren können, und in ihrem jeweiligen geschlossenen Zustand einen Strom von dem ersten Versorgungsanschluss 18 zu dem zweiten Versorgungsanschluss 19 in eine Vorwärtsrichtung leiten können.

In der jeweiligen ersten Halbbrückenstellung 13-1, 14-1, 15-1 sind die High-Side-Schaltelemente 131, 141, 151 geschlossen, wohingegen die Low-Side-Schaltelemente 132, 142, 152 geöffnet sind. Demgegenüber ist in der zweiten Halbbrückenstellung dasjenige der Schaltelemente 132, 142, 152, welches innerhalb der jeweiligen Halbbrücke 13, 14, 15 in einem elektrischen Pfad zwischen dem zweiten Versorgungsanschluss 19 und dem jeweils anderen der Schaltelemente 131, 141, 151 angeordnet ist, geschlossen, wobei das andere der Schaltelemente 131, 141, 151 geöffnet ist. Im Ausführungsbeispiel ist somit das jeweilige Low-Side-Schaltelement 132, 142, 152 in der zweiten Halbbrückenstellung 13-2, 14-2, 15-2 geschlossen, wohingegen das jeweilige High-Side-Schaltelement 131, 141, 151 in der zweiten Halbbrückenstellung 13-2, 14-2, 15-2 geöffnet ist.

In der dritten Halbbrückenstellung 13-3, 14-3, 15-3 sind sowohl die High-Side-Schaltelemente 131, 141, 151 als auch die Low-Side-Schaltelemente 132, 142, 152 der jeweiligen Halbbrücke 13, 14, 15 geöffnet. Somit befindet sich jede der Halbbrücken 13, 14, 15 in ihrer dritten Halbbrückenstellung 13-3, 14-3, 15-3 insgesamt in einem hochohmigen Zustand.

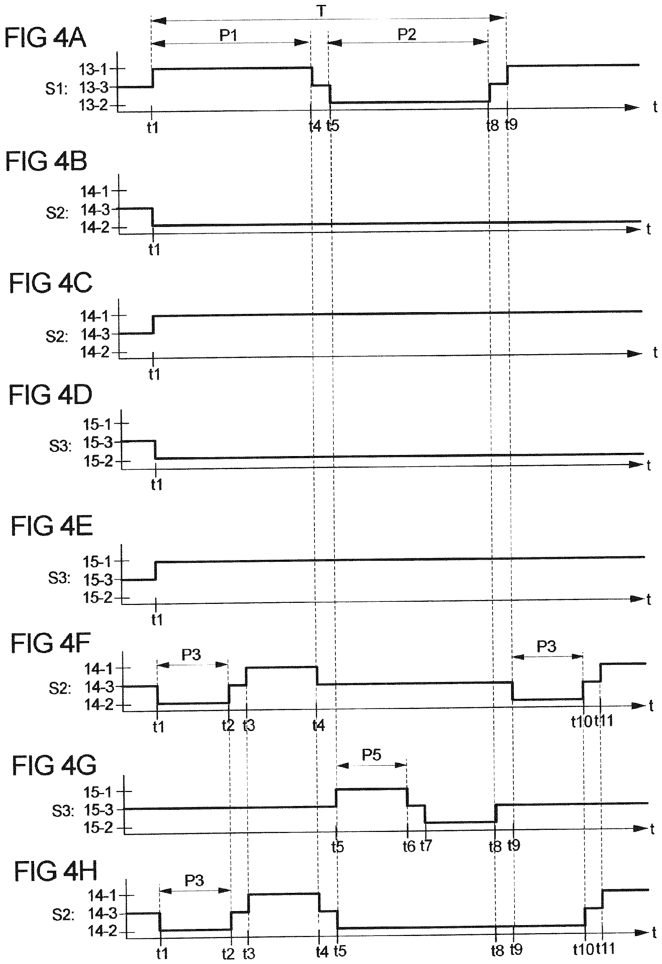

In den Figuren 4A-4H sind verschiedene Schaltsequenzen S1, S2, S3 für die drei Halbbrücken 13, 14, 15 dargestellt, mit welchen die beiden Elektromotoren 11, 12 unabhängig voneinander angesteuert werden können, um das oben beschriebene Verhalten mit Blick auf die jeweilige Drehrichtung D1, D2, D3, D4 und/oder jeweilige Drehzahl zu bewirken. Dabei ist jeweils auf einer Abszisse eine Zeit t und auf einer Ordinate die zugehörige Halbbrückenstellung 13-1, 13-2, 13-3, 14-1, 14-2, 14-3, 15-1, 15-2, 15-3. Die Schaltsequenzen S1, S2, S3 können beispielsweise durch entsprechende Sequenzen von Steuersignalen VG1, VG2, VG3, VG4, VG5, VG6 für die Schaltelemente 131, 132, 133, 134, 135, 136, die von der Steuereinheit 3 bereitgestellt werden, realisiert werden.

Wie in Figur 4A dargestellt, wird die erste Halbbrücke 13 in einer ersten Schaltsequenz S1 periodisch für eine Pulsdauer P1 in die erste Halbbrückenstellung 13-1 und für eine zweite Pulsdauer P2 in die zweite Halbbrückenstellung 13-2 geschaltet. Eine Periodendauer T, die in Figur 4A von dem Zeitpunkt t1 bis zu dem Zeitpunkt t9 reicht, kann dabei beispielsweise einer Frequenz von einigen Kilohertz entsprechen.

In dem dargestellten Ausführungsbeispiel wird die erste Halbbrücke 13 nach der ersten Pulsdauer P1 nicht direkt aus ihrer ersten Halbbrückenstellung 13-1 in ihre zweite Halbbrückenstellung 13-2 geschaltet. Zum Zeitpunkt t4 erfolgt zunächst ein Umschalten aus der ersten Halbbrückenstellung 13-1 in die hochohmigen dritte Halbbrückenstellung 13-3. Erst zu einem Zeitpunkt t5 erfolgt ein Umschalten aus der dritten Halbbrückenstellung 13-3 in die zweite Halbbrückenstellung 13-2. Der vergleichsweise kurze Schaltversatz zwischen den Zeitpunkten t4 und t5, in welchem die erste Halbbrücke 13 ihre hochohmige dritte Halbbrückenstellung 13-3 einnimmt, ist zur Vermeidung eines Halbbrückenkurzschlusses vorgesehen. Wäre ein exakt simultanes Öffnen des ersten Schaltelements 131 und Schließen des zweiten Schaltelements 132 vorgesehen, so bestünde in der Praxis die Gefahr, dass beide Schaltelemente 131, 132 der ersten Halbbrücke 13 kurzzeitig zugleich geschlossen wären. Ein entsprechender Schaltversatz ist zwischen den Zeitpunkten t8 und t9 beim Umschalten der ersten Halbbrücke 13 aus ihrer zweiten Halbbrückenstellung 13-2 in ihre erste Halbbrückenstellung 13-1 vorgesehen.

Die erste Pulsdauer P1, und die zweite Pulsdauer P2 sind gemäß dem Ausführungsbeispiel der Figur 4A im Wesentlichen gleich lang, sodass die erste Halbbrücke 13 sich während jeder Periodendauer T in etwa gleich lang in ihrer ersten Halbbrückenstellung 13-1 und in ihrer zweiten Halbbrückenstellung 13-2 befindet. Beispielsweise kann ein Verhältnis der ersten Pulsdauer P1 zu der zweiten Pulsdauer P2 im Bereich von 0,9 bis 1,1 liegen. Dabei können ein Verhältnis der ersten Pulsdauer P1 zu der Periodendauer T und ein Verhältnis der zweiten Pulsdauer P2 zu der Periodendauer T jeweils beispielsweise im Bereich von 0,4 bis 0,6 liegen. In diesem Fall befindet sich die erste Halbbrücke 13 während in etwa für eine Hälfte jeder Periodendauer T in der ersten Halbbrückenstellung 13-1 und in etwa für die andere Hälfte jeder Periodendauer T in der zweiten Halbbrückenstellung 13-2.

Zeitgleich zu der ersten Schaltsequenz S1 der ersten Halbbrücke 13 kann zum Ansteuern des ersten Elektromotors 11 die zweite Halbbrücke 14 in einer zweiten Schaltsequenz S2 und/oder zum Ansteuern des zweiten Elektromotors 12 die dritte Halbbrücke 15 in einer dritten Schaltsequenz S3 zwischen der jeweiligen ersten Halbbrückenstellung 14-1, 15-1, der jeweiligen zweiten Halbbrückenstellung 14-2, 15-2 und/oder der jeweiligen dritten Halbbrückenstellung 14-3, 15-3 geschaltet werden. Mögliche Schaltsequenzen S2, S3 für die zweite Halbbrücke 14 und die dritte Halbbrücke 15 sind beispielhaft in den Figuren 4B bis 4H dargestellt.

Bei der in Figur 4B gezeigten zweiten Schaltsequenz S2 wird die zweite Halbbrücke 14 zum Zeitpunkt t1 aus ihrer hochohmigen dritten Halbbrückenstellung 14-3 in ihre zweite Halbbrückenstellung 14-2 geschaltet und verbleibt über die gesamte Periodendauer T hinweg in der zweiten Halbbrückenstellung 14-2. Insbesondere kann die zweite Halbbrücke 14 für mehrere Periodendauern T der ersten Schaltsequenz S1 in ihrer zweiten Halbbrückenstellung 14-2 verbleiben (nicht dargestellt). Zwischen den Zeitpunkten t1 und t4 und ggf. zwischen entsprechenden Zeitpunkten in den nachfolgenden Perioden der ersten Schaltsequenz S1 sind für die erste Pulsdauer P1 das erste Schaltelement 131 als High-Side-Schaltelement und das vierte Schaltelement 142 als Low-Side-Schaltelement zugleich geschlossen. Dabei treibt in Folge der Versorgungsspannung V ein Stromfluss I1 von dem ersten Motorkontakt 111 zu dem zweiten Motorkontakt 112 den ersten Elektromotor 11 in die Drehrichtung D1 an. Demgegenüber ist vom Zeitpunkt t4 bis zum Zeitpunkt t9 das erste Schaltelement 131 geöffnet, wobei auch das dritte Schaltelement 141 unverändert geöffnet bleibt, sodass der erste Elektromotor 11 von dem High-Side-Potenzial V1 getrennt ist und nicht durch einen Stromfluss von dem ersten Versorgungsanschluss 18 zu dem zweiten Versorgungsanschluss 19 angetrieben wird.

Zwischen den Zeitpunkten t4 und t9 kann jedoch durch Selbstinduktion an dem ersten Elektromotor 11 der Stromfluss I1 von dem ersten Motorkontakt 111 zu dem zweiten Motorkontakt 112 wenigstens teilweise als Freilaufstrom aufrechterhalten werden. Dabei kann der Freilaufstrom im Urzeigersinn im Kreis durch den ersten Brückenzweig 1-10, durch das vierte Schaltelement 142, durch das zweite Schaltelement 132, und von dort zurück zu dem ersten Brückenzweig 1-10 fließen. Das zweite Schaltelement 132 wird dabei von dem Freilaufstrom in einer Rückwärtsrichtung durchflossen. Dies kann beispielsweise durch eine intrinsische Rückwärtsdiode des MOSFETs 132 ermöglicht werden. In anderen Ausführungsformen, insbesondere wenn es sich bei den Schaltelementen 131, 132, 141, 142, 151, 152 um IGBTs handelt, können zum Ermöglichen eines Freilaufstroms separate Freilaufdioden vorgesehen sein, die jeweils zu einem der Schaltelemente 131, 132, 141, 142, 151, 152 antiparallel geschaltet sind, so eine Durchlassrichtung der jeweiligen Freilaufdiode einer Rückwärtsrichtung des jeweiligen Schaltelements 131, 132, 141, 142, 151, 152 entspricht.

Vom Zeitpunkt t5 bis zum Zeitpunkt t8 ist das zweite Schaltelement 132 geschlossen, sodass in Folge der Gate-Spannung VG2 in dem MOSFET 132 ein n-Kanal ausgebildet ist. Auf diese Weise wird für die Pulsdauer P2 ein aktiver Freilauf ermöglicht, bei dem der Freilaufstrom durch das zweite Schaltelement 132 nicht eine Schwellspannung der intrinsischen Rückwärtsdiode überwinden muss und folglich unter geringeren Verlusten in Rückwärtsrichtung durchfließen kann als dies zwischen den Zeitpunkten t4 und t5 bzw. zwischen den Zeitpunkten t8 und t9 der Fall ist.

Im Ergebnis wird der erste Elektromotor 11 durch eine Kombination der ersten Schaltsequenz S1 gemäß Figur 4A und der zweiten Schaltsequenz S2 gemäß Figur 4B im Wesentlichen für die Hälfte der Zeit durch den Stromfluss I1 in die Drehrichtung D1 angetrieben.

Die Figur 4C zeigt eine alternative zweite Schaltsequenz S2, bei der die zweite Halbbrücke 14 zum Zeitpunkt t1 aus ihrer dritten Halbbrückenstellung 14-3 in ihre erste Halbbrückenstellung 14-1 geschaltet wird und anschließend mindestens über die gesamte Periodendauer T hinweg in der ersten Halbbrückenstellung 14-1 verbleibt. Zwischen dem Zeitpunkt t1 und dem Zeitpunkt t5 sind die Low-Side-Schaltelemente 132, 142 der ersten Halbbrücke 13 und der zweiten Halbbrücke 14 geöffnet, sodass der erste Elektromotor 11 von dem Low-Side-Potenzial V2 getrennt ist und dementsprechend nicht durch einen Stromfluss von dem ersten Versorgungsanschluss 18 zu dem zweiten Versorgungsanschluss 19 angetrieben wird. Demgegenüber sind während der zweiten Pulsdauer P2, d.h. zwischen dem Zeitpunkt t5 und dem Zeitpunkt t8, das zweite Schaltelement 132 und das dritte Schaltelement 141 zugleich geschlossen, sodass der erste Elektromotor 11 durch einen Stromfluss I2 zwischen dem zweiten Motorkontakt 112 und dem ersten Motorkontakt 111 in die entgegengesetzte Drehrichtung D2 angetrieben wird. Das Antreiben des ersten Elektromotors 11 in die entgegengesetzte Drehrichtung D2 erfolgt dabei periodisch mit der Periodendauer T jeweils für die zweite Pulsdauer P2.

Zwischen den zweiten Pulsen P2 kann jeweils ein Freilaufstrom im Uhrzeigersinn durch den ersten Brückenzweig 1-10, das erste Schaltelement 131 und das dritte Schaltelement 141 zirkulieren. Dabei ermöglicht jeweils das Schließen des ersten Schaltelements 131 für die Pulsdauer P1 einen aktiven Freilauf.

Die Figuren 4D und 4E zeigen zwei mögliche dritte Schaltsequenzen S3 für die dritte Halbbrücke 15, welche ganz analog zu den obenstehend anhand der Figuren 4B und 4C erläuterten zweiten Schaltsequenzen S2 für die zweite Halbbrücke 14 zu verstehen sind.

So wird die dritte Halbbrücke 15 bei einer Kombination der ersten Schaltsequenz S1 gemäß Figur 4A mit der dritten Schaltsequenz S3 gemäß Figur 4D für mehrere Periodendauern T in ihre zweite Halbbrückenstellung 15-2 geschaltet. Zwischen den Zeitpunkten t1 und t4 sowie zwischen den jeweiligen entsprechenden Zeitpunkten der (nicht dargestellten) nachfolgenden Perioden der ersten Schaltsequenz S1 sind das erste Schaltelement 131 und das sechste Schaltelement 152 zugleich geschlossen, sodass der Stromfluss I4 von dem vierten Motorkontakt 122 zu dem dritten Motorkontakt 121 den zweiten Elektromotor 12 für die Pulsdauer P1, d.h. in etwa für die Hälfte jeder Periodendauer T, aktiv in die entgegengesetzte Drehrichtung D4 antreibt. Zwischen den Zeitpunkten t4 und t9 sowie zwischen den entsprechenden Zeitpunkten der nachfolgenden Perioden kann dabei ein Freilaufstrom im Uhrzeigersinn durch den zweiten Brückenzweig 1-20, durch das sechste Schaltelement 152 und - in Rückwärtsrichtung - durch das zweite Schaltelement 132 zirkulieren. Dabei kann zwischen den Zeitpunkten t5 und t8 sowie zwischen entsprechenden Zeitpunkten in den nachfolgenden Perioden jeweils für die zweite Pulsdauer P2 ein aktiver Freilauf erfolgen.

Alternativ hierzu wird gemäß der Figur 4E zum Ansteuern des zweiten Elektromotors 12 derart, dass er in die Drehrichtung D3 angetrieben wird, die dritte Halbbrücke 15 für mehrere Periodendauern T in ihre erste Halbbrückenstellung 15-1 geschaltet. Dabei sind zwischen den Zeitpunkten t5 und t8 und zwischen entsprechenden Zeitpunkten in den nachfolgenden Perioden der ersten Schaltsequenz S1 jeweils für die zweite Pulsdauer P2 das zweite Schaltelement 132 und das fünfte Schaltelement 151 zugleich geschlossen, sodass ein Stromfluss I3 von dem dritten Motorkontakt 121 zu dem vierten Motorkontakt 122 den zweiten Elektromotor 12 in die Drehrichtung D3 antreibt. Zwischen diesen Phasen kann ein Freilaufstrom im Uhrzeigersinn durch den zweiten Brückenzweig 1-20, in Rückwärtsrichtung durch das erste Schaltelement 131 und das fünfte Schaltelement 151 zirkulieren, wobei jeweils für die erste Pulsdauer P1 durch Schließen des ersten Schaltelements 131 ein aktiver Freilauf ermöglicht wird.

Die zweiten und dritten Schaltsequenzen S2, S3 nach Figuren 4B bis 4E bewirken - bezogen auf eine vorgegebene erste Schaltsequenz S1 gemäß Figur 4A - einen Betrieb der Elektromotoren 11, 12 in ihrer jeweiligen Drehrichtung D1, D2, D3, D4 mit einer maximalen möglichen Drehzahl, da die jeweiligen Pulsdauern P1, P2 als Versorgungsphasen für den Antrieb der Elektromotoren 11, 12 komplett ausgenutzt werden.

Zum Einstellen einer jeweiligen Drehzahl der Elektromotoren 11, 12 kann bei der zweiten Schaltsequenz S2 und/oder bei der dritten Schaltsequenz S3 ein Verfahren der Pulsweitenmodulation angewendet werden. Dies wird beispielhaft in den Figuren 4F bis 4H gezeigt.

Bei der zweiten Schaltsequenz S2 gemäß Figur 4F wird die zweite Halbbrücke 14 periodisch während jeder ersten Pulsdauer P1 der ersten Schaltsequenz S1 für eine dritte Pulsdauer P3 in ihre zweite Halbbrückenstellung 14-2 geschaltet. Dabei ist die dritte Pulsdauer P3 kürzer als die erste Pulsdauer P1. Bei dem in Figur 4F gezeigten Ausführungsbeispiel ist die dritte Pulsdauer P3 zwischen den Zeitpunkten t1 und t2 bzw. zwischen den Zeitpunkten t9 und t10 in etwa halb so lang wie die erste Pulsdauer P1 der ersten Schaltsequenz S1. Während der dritten Pulsdauer P3 wird der erste Elektromotor 11 jeweils aktiv durch einen Stromfluss I1 in die Drehrichtung D1 angetrieben, wie obenstehend mit Bezug auf Figur 4B beschrieben. Nach Ablauf der dritten Pulsdauer P3 erfolgt zum Zeitpunkt t2 bzw. zum Zeitpunkt t10 (und zu entsprechenden Zeitpunkten in den folgenden Perioden) ein Umschalten der zweiten Halbbrücke 14 in ihre hochohmige dritte Halbbrückenstellung 14-3. Kurz darauf, zum Zeitpunkt t3 bzw. t11, erfolgt dann ein Umschalten in die erste Halbbrückenstellung 14-1. Dabei dient ein Schaltversatz zwischen den Zeitpunkten t2 und t3 (bzw. zwischen den Zeitpunkten t10 und t11 usw.) der Vermeidung eines Halbbrückenkurzschlusses, wie obenstehend mit Bezug auf die erste Schaltsequenz S1 erläutert.

Anschließend verbleibt die zweite Halbbrücke 14 bis zum Ende der ersten Pulsdauer P1 in ihrer ersten Halbbrückenstellung 14-1. In der Phase zwischen den Zeitpunkten t2 und t4, kann ein Freilaufstrom gegen den Uhrzeigersinn durch den ersten Brückenzweig 1-10, das dritte Schaltelement 141 und das erste Schaltelement 131 zirkulieren. Zwischen den Zeitpunkten t3 und t4 kann das geschlossene dritte Schaltelement 141 dabei einen aktiven Freilauf ermöglichen. Danach, d.h. zum Zeitpunkt t4, wird die zweite Halbbrücke 14 (mit einem Schaltversatz zwischen den Zeitpunkten t4 und t5) für den Rest der Periodendauer T in ihre dritte Halbbrückenstellung 14-3 geschaltet. Alternativ kann die zweite Halbbrücke 14, wie in Figur 4H dargestellt, zum Zeitpunkt t5 in ihre zweite Halbbrückenstellung 14-2 geschaltet werden, um während der zweiten Pulsdauer P2 einen aktiven Freilauf durch den zweiten Brückenzweig 1-20, das vierte Schaltelement 142 und das zweite Schaltelement 132 zu ermöglichen.

Durch ein Einstellen eines Verhältnisses der dritten Pulsdauer P3 der zweiten Schaltsequenz S2 zu der Periodendauer T der ersten Schaltsequenz S1 in einem Bereich von 0 bis zu dem Verhältnis zwischen der ersten Pulsdauer P1 und der Periodendauer T kann die Drehzahl des ersten Elektromotors 11 gesteuert werden. Dabei ist die Drehzahl des ersten Elektromotors 11 umso größer, je größer das Verhältnis der dritten Pulsdauer P3 zu der Periodendauer T ist, da im zeitlichen Mittel über mehrere Periodendauern T der Stromfluss I1 sich im Wesentlichen proportional zu dem Verhältnis der dritten Pulsdauer P3 zu der Periodendauer T verhält.

Um den ersten Elektromotor 11 in die entgegengesetzte Drehrichtung D2 anzutreiben, kann in einer weiteren Variante der zweiten Schaltsequenz S2 (nicht dargestellt) die zweite Halbbrücke 14 periodisch in ihre erste Halbbrückenstellung 14-1 geschaltet werden, derart dass die zweite Halbbrücke 14 die erste Halbbrückenstellung 14-1 mindestens für eine vierte Pulsdauer P4 einnimmt, während derer sich die erste Halbbrücke 13 in ihrer zweiten Halbbrückenstellung 13-2 befindet. Dabei wird der erste Elektromotor 11 für die vierte Pulsdauer P4 von einem Stromfluss I2 von dem zweiten Motorkontakt 112 zu dem ersten Motorkontakt 111 in die entgegengesetzte Drehrichtung D2 angetrieben. Einzelheiten der Funktionsweise des Antriebs sind dabei ganz analog zu dem obenstehend mit Bezug auf den Antrieb in die erste Drehrichtung D1 Beschriebenen zu verstehen. Dabei kann die Drehzahl des ersten Elektromotors 11 wiederum durch Einstellen eines Verhältnisses der vierten Pulsdauer P4 zu der Periodendauer T gesteuert werden.

Die Figur 4G zeigt einen Ausschnitt einer dritten Schaltsequenz S3 zum Antreiben des zweiten Elektromotors 12 in die Drehrichtung D3. Dabei wird die dritte Halbbrücke 15 periodisch, während sich die erste Halbbrücke 13 für die erste Pulsdauer P2 in ihrer zweiten Halbbrückenstellung 13-2 befindet, jeweils für eine fünfte Pulsdauer P5 in ihre erste Halbbrückenstellung 15-1 geschaltet. Der zweite Elektromotor 12 wird jeweils für die fünfte Pulsdauer P5, d.h. beispielsweise zwischen den Zeitpunkten t5 und t6, durch den Stromfluss I3 von dem dritten Motorkontakt 121 zu dem vierten Motorkontakt 122 in die Drehrichtung D3 angetrieben.

Zwischen den Zeitpunkten t6 und t8 kann der zweite Elektromotor 2 einen Freilaufstrom gegen den Uhrzeigersinn durch den zweiten Brückenzweig 1-20, das zweite Schaltelement 132 und das sechste Schaltelement 152 treiben, wobei vom Zeitpunkt t7 bis zum Zeitpunkt t8 durch das geschlossene sechste Schaltelement 152 ein aktiver Freilauf ermöglicht wird. In einer (nicht dargestellten) Variante kann auch während der sich anschließenden ersten Pulsdauer P1 durch Schalten der dritten Halbbrücke 15 in ihre erste Halbbrückenstellung 15-1 ein aktiver Freilauf ermöglicht werden.

Um den zweiten Elektromotor 12 in die entgegengesetzte Drehrichtung D4 anzutreiben, kann in einer weiteren Variante der dritten Schaltsequenz S3 (nicht dargestellt) die dritte Halbbrücke periodisch in ihre zweite Halbbrückenstellung 15-2 geschaltet werden, so dass die dritte Halbbrücke 15 die zweite Halbbrückenstellung 15-2 mindestens für eine sechste Pulsdauer P6 einnimmt, während derer sich die erste Halbbrücke 13 in ihrer ersten Halbbrückenstellung 13-1 befindet. Dabei wird der zweite Elektromotor 12 für die sechste Pulsdauer P6 von einem Stromfluss I4 von dem vierten Motorkontakt 122 zu dem dritten Motorkontakt 121 in die entgegengesetzte Drehrichtung D4 angetrieben. Die Drehzahl des zweiten Elektromotors 12 kann dabei durch Einstellen eines Verhältnisses der sechsten Pulsdauer P6 zu der Periodendauer T gesteuert werden.

Die obenstehend beschriebenen zweiten Schaltsequenzen S2 für die zweite Halbbrücke 14 einerseits und dritten Schaltsequenzen S3 für die dritte Halbbrücke 15 andererseits können sequenziell oder simultan verwendet werden, um den ersten Elektromotor 11 und den zweiten Elektromotor 12 nacheinander oder gleichzeitig mit einer gewünschten Drehzahl in eine gewünschte Drehrichtung D1, D2, D3, D4 anzutreiben.

Es liegt im Rahmen der Erfindung, dass die elektrische Anordnung 1 über den ersten Elektromotor 11 und den zweiten Elektromotor 12 hinaus weitere Elektromotoren mit jeweils einer zugeordneten weiteren Halbbrücke umfassen kann. Die weiteren Halbbrücken können jeweils mindestens zwei weitere Schaltelemente umfassen. Dabei kann jeder der weiteren Elektromotoren jeweils in einem weiteren Brückenzweig angeordnet sein, welcher zusammen mit der ersten Halbbrücke 13 und der dem weiteren Elektromotor zugeordneten weiteren Halbbrücke eine weitere H-Brückenanordnung bildet. Ein Ansteuern jeweils eines der weiteren Elektromotoren kann dabei analog zu dem oben beschriebenen Verfahren durch Schalten des ersten und/oder zweiten Schaltelements 131, 132 der ersten Halbbrücke 13 sowie der weiteren Schaltelemente der jeweils zugeordneten weiteren Halbbrücke erfolgen. Auf diese Weise können mittels der elektrischen Anordnung 1 auch mehr als zwei Elektromotoren zugleich mit jeweils einer gewünschten Drehzahl in eine jeweils gewünschte Drehrichtung angetrieben werden.

Insbesondere kann in einer Fensterhebervorrichtung für ein Kraftfahrzeug an einer linken vorderen Fensterscheibe, an einer rechten vorderen Fensterscheibe, an einer linken hinteren Fensterscheibe und an einer rechten hinteren Fensterscheibe jeweils ein Elektromotor als Verstellmotor zum Verstellen der jeweiligen Fensterscheibe angeordnet sein. Die vier Elektromotoren können in der oben beschriebenen Weise in einer erfindungsgemäßen elektrischen Anordnung 1 angeordnet sein. Mittels der elektrischen Anordnung 1 können die vier Verstellmotoren unabhängig voneinander zum Anheben oder Absenken der jeweiligen Fensterscheibe angesteuert werden.

### Bezugszeichenliste

- 1: Elektrische Anordnung
- 1-1: Erste H-Brückenanordnung
- 1-10: Erster Brückenzweig
- 1-2: Zweite H-Brückenanordnung
- 1-20: Zweiter Brückenzweig
- 11: Erster Elektromotor
- 111: Erster Motorkontakt
- 112: Zweiter Motorkontakt
- 12: Zweiter Elektromotor
- 121: Dritter Motorkontakt
- 122: Vierter Motorkontakt
- 13: Erste Halbbrücke
- 131: Erstes Schaltelement
- 132: Zweites Schaltelement
- 13-1: Erste Halbbrückenstellung
- 13-2: Zweite Halbbrückenstellung
- 13-3: Dritte Halbbrückenstellung
- 14: Zweite Halbbrücke
- 141: Drittes Schaltelement
- 142: Viertes Schaltelement
- 14-1: Erste Halbbrückenstellung
- 14-2: Zweite Halbbrückenstellung
- 14-3: Dritte Halbbrückenstellung
- 15: Dritte Halbbrücke
- 151: Fünftes Schaltelement
- 152: Sechstes Schaltelement
- 15-1: Erste Halbbrückenstellung
- 15-2: Zweite Halbbrückenstellung
- 15-3: Dritte Halbbrückenstellung
- 18: Erster Versorgungsanschluss
- 19: Zweiter Versorgungsanschluss
- 2: Elektrische Anordnung gemäß dem Stand der Technik
- 2-1: Erste H-Brückenanordnung
- 2-10: Erster Brückenzweig
- 2-2: Zweite H-Brückenanordnung
- 2-20: Zweiter Brückenzweig
- 21: Erster Elektromotor
- 211: Erster Motorkontakt
- 212: Zweiter Motorkontakt
- 22: Zweiter Elektromotor
- 221: Dritter Motorkontakt
- 222: Vierter Motorkontakt
- 23: Erste Halbbrücke
- 231: Erstes Schaltelement
- 232: Zweites Schaltelement
- 23-1: Erste Halbbrückenstellung
- 23-2: Zweite Halbbrückenstellung
- 23-3: Dritte Halbbrückenstellung
- 24: Zweite Halbbrücke
- 241: Drittes Schaltelement
- 242: Viertes Schaltelement
- 24-1: Erste Halbbrückenstellung
- 24-2: Zweite Halbbrückenstellung
- 24-3: Dritte Halbbrückenstellung
- 25: Dritte Halbbrücke
- 251: Fünftes Schaltelement
- 252: Sechstes Schaltelement
- 25-1: Erste Halbbrückenstellung
- 25-2: Zweite Halbbrückenstellung
- 25-3: Dritte Halbbrückenstellung
- 26: Vierte Halbbrücke
- 261: Siebtes Schaltelement
- 262: Achtes Schaltelement
- 26-1: Erste Halbbrückenstellung
- 26-2: Zweite Halbbrückenstellung
- 26-3: Dritte Halbbrückenstellung
- 28: Erster Versorgungsanschluss
- 29: Zweiter Versorgungsanschluss
- 3: Steuereinheit

- D1, D2, D3, D4: Drehrichtungen
- P1: Erste Pulsdauer
- P2: Zweite Pulsdauer
- P3: Dritte Pulsdauer
- P4: Vierte Pulsdauer
- P5: Fünfte Pulsdauer
- P6: Sechste Pulsdauer
- S1: Erste Schaltsequenz
- S2: Zweite Schaltsequenz
- S3: Dritte Schaltsequenz
- T: Periodendauer
- t: Zeit
- t1 - t11: Zeitpunkte
- V: Versorgungsspannung
- V1: Erstes Potenzial
- V2: Zweites Potenzial

## Patentansprüche

1. Elektrische Anordnung (1), die zum Ansteuern wenigstens zweier Elektromotoren (11, 12) wenigstens eine erste H-Brückenanordnung (1-1) und eine zweite H-Brückenanordnung (1-2) aufweist, umfassend
- einen ersten Elektromotor (11), der mit einem ersten Schaltelement (131), einem zweiten Schaltelement (132), einem dritten Schaltelement (141) und einem vierten Schaltelement (142) in der ersten H-Brückenanordnung (1-1) elektrisch verbunden ist, wobei der erste Elektromotor (11)
- in einem ersten Brückenzweig (1-10) der ersten H-Brückenanordnung (1-1) angeordnet ist,
- über einen ersten Motorkontakt (111) an eine erste Halbbrücke (13) angeschlossen ist, wobei die erste Halbbrücke (13) das erste Schaltelement (131) und das zweite Schaltelement (132) umfasst, und
- über einen zweiten Motorkontakt (112) an eine zweite Halbbrücke (14) angeschlossen ist, wobei die zweite Halbbrücke (14) das dritte Schaltelement (141) und das vierte Schaltelement (142) umfasst,
und
- einen zweiten Elektromotor (12), der in einem zweiten Brückenzweig (1-20) der zweiten H-Brückenanordnung (1-2) angeordnet ist und über einen dritten Motorkontakt (121) an eine dritte Halbbrücke (15) angeschlossen ist, wobei die dritte Halbbrücke (15) ein fünftes Schaltelement (151) und ein sechstes Schaltelement (152) umfasst,
**dadurch gekennzeichnet,**
**dass** der zweite Elektromotor (12) über einen vierten Motorkontakt (122) derart an die erste Halbbrücke (13) angeschlossen ist, dass der zweite Elektromotor (12) mit dem ersten Schaltelement (131), dem zweiten Schaltelement (132), dem fünften Schaltelement (151) und dem sechsten Schaltelement (152) in der zweiten H-Brückenanordnung (1-2) elektrisch verbunden ist.

2. Elektrische Anordnung (1) nach Anspruch 1, **dadurch gekennzeichnet, dass** jedes der Schaltelemente (131, 132, 141, 142, 151, 152) in Abhängigkeit je eines Steuersignals (VG1, VG2, VG3, VG4, VG5, VG6) in einen geschlossenen Zustand und in einen geöffneten Zustand schaltbar ist.

3. Elektrische Anordnung (1) nach Anspruch 1 oder 2, **dadurch gekennzeichnet, dass** die Schaltelemente (131, 132, 141, 142, 151, 152) mindestens einen Halbleitertransistor, insbesondere mindestens einen MOSFET oder mindestens einen IGBT, umfassen.

4. Elektrische Anordnung (1) nach Anspruch 2 oder 3, **gekennzeichnet durch** mindestens eine Steuereinheit (3), die zum Erzeugen der Steuersignale (VG1, VG2, VG3, VG4, VG5, VG6) für die Schaltelemente (131, 132, 141, 142, 151, 152) in Abhängigkeit von einer gewünschten Drehrichtung (D1, D2, D3, D4) und/oder Drehzahl für des ersten Elektromotors (11) und/oder des zweiten Elektromotors (12) ausgebildet und angeordnet ist.

5. Elektrische Anordnung (1) nach einem der vorangehenden Ansprüche, **dadurch gekennzeichnet, dass**
- der erste Elektromotor (11) durch einen Stromfluss (I1) von dem ersten Motorkontakt (111) zu dem zweiten Motorkontakt (112) in eine Drehrichtung (D1) antreibbar ist und durch einen Stromfluss (I2) von dem zweiten Motorkontakt (112) zu dem ersten Motorkontakt (111) in eine entgegengesetzte Drehrichtung (D2) antreibbar ist; und
- der zweite Elektromotor (12) durch einen Stromfluss (I3) von dem dritten Motorkontakt (121) zu dem vierten Motorkontakt (122) in eine Drehrichtung (D3) antreibbar ist und durch einen Stromfluss (I4) von dem vierten Motorkontakt (122) zu dem dritten Motorkontakt (121) in eine entgegengesetzte Drehrichtung (D4) antreibbar ist.

6. Elektrische Fensterhebervorrichtung für ein Kraftfahrzeug, mit mindestens einem ersten Verstellmotor (11) zum Verstellen einer ersten Fensterscheibe und mindestens einem zweiten Verstellmotor (12) zum Verstellen einer zweiten Fensterscheibe, **gekennzeichnet durch** mindestens eine elektrische Anordnung (1) nach einem der vorangehenden Ansprüche mit dem mindestens einen ersten Verstellmotor als erstem Elektromotor (11) und mit dem mindestens einen zweiten Verstellmotor als zweitem Elektromotor (12).

7. Verfahren zum Ansteuern wenigstens zweier Elektromotoren (11, 12), insbesondere mittels Pulsweitenmodulation, unter Verwendung einer elektrischen Anordnung (1), die zum Ansteuern der Elektromotoren (11, 12) wenigstens eine erste H-Brückenanordnung (1-1) und eine zweite H-Brückenanordnung (1-2) aufweist,
**dadurch gekennzeichnet,**
**dass** die elektrische Anordnung (1) das Folgende umfasst:
- einen ersten Elektromotor (11), der in einem ersten Brückenzweig (1-10) der ersten H-Brückenanordnung (1-1) angeordnet ist und mit einer ersten Halbbrücke (13) und einer zweiten Halbbrücke (14) in der ersten H-Brückenanordnung (1-1) elektrisch verbunden ist, und
- einen zweiten Elektromotor (11), der in einem zweiten Brückenzweig (1-20) der zweiten H-Brückenanordnung (1-2) angeordnet ist und mit der ersten Halbbrücke (13) und einer dritten Halbbrücke (15) in der zweiten H-Brückenanordnung (1-2) elektrisch verbunden ist,
wobei jede der Halbbrücken (13, 14, 15) wenigstens zwei Schaltelemente (131, 132, 141, 142, 152) umfasst,
und **dass**
- der ersten Elektromotor (11) durch Schalten der Schaltelemente (131, 132, 141, 142) der ersten Halbbrücke (13) und der zweiten Halbbrücke (14) angesteuert wird, und/oder
- der zweite Elektromotor (12) durch Schalten der Schaltelemente (131, 132, 151, 152) der ersten Halbbrücke (13) und der dritten Halbbrücke (15) angesteuert wird.

8. Verfahren nach Anspruch 7, **dadurch gekennzeichnet, dass** jede der Halbbrücken (11, 12, 13) mit einem ersten Versorgungsanschluss (18) und mit einem zweiten Versorgungsanschluss (19) elektrisch verbunden ist und jeweils in eine erste Halbbrückenstellung (13-1, 14-1, 15-1), in eine zweite Halbbrückenstellung (13-2, 14-2, 15-2) und in eine dritte Halbbrückenstellung (13-2, 14-2, 15-2) schaltbar ist, wobei
- in der ersten Halbbrückenstellung (13-1, 14-1, 15-1) dasjenige der Schaltelemente (131, 141, 151), welches innerhalb der jeweiligen Halbbrücke (13, 14, 15) in einem elektrischen Pfad zwischen dem ersten Versorgungsanschluss (18) und dem jeweils anderen der Schaltelemente (132, 142, 152) angeordnet ist, geschlossen ist, während das andere der Schaltelemente (132, 142, 152) geöffnet ist,
- in der zweiten Halbbrückenstellung (13-2, 14-2, 15-2) dasjenige der Schaltelemente (132, 142, 152), welches innerhalb der jeweiligen Halbbrücke (13, 14, 15) in einem elektrischen Pfad zwischen dem zweiten Versorgungsanschluss (19) und dem jeweils anderen der Schaltelemente (131, 141, 151) angeordnet ist, geschlossen ist, während das andere der Schaltelemente (131, 141, 151) geöffnet ist, und
- in der dritten Halbbrückenstellung (13-3, 14-3, 15-3) die Schaltelemente (131, 132, 141, 142, 151, 152) der jeweiligen Halbbrücke (13, 14, 15) geöffnet sind.

9. Verfahren nach Anspruch 8, **dadurch gekennzeichnet, dass** zum Ansteuern der Elektromotoren (11, 12) die erste Halbbrücke (13) in einer ersten Schaltsequenz (S1) periodisch jeweils für eine erste Pulsdauer (P1) in die erste Halbbrückenstellung (13-1) und jeweils für eine zweite Pulsdauer (P2) in die zweite Halbbrückenstellung (13-2) geschaltet wird und je nach anzusteuerndem Elektromotor (11, 12) die zweite Halbbrücke (14) und/oder die dritte Halbbrücke (15) geschaltet wird.

10. Verfahren nach Anspruch 9, **dadurch gekennzeichnet, dass**
- die zweite Halbbrücke (14) in einer zweiten Schaltsequenz (S2) zwischen der ersten Halbbrückenstellung (14-1), der zweiten Halbbrückenstellung (14-2) und/oder der dritten Halbbrückenstellung (14-3) geschaltet wird, um den ersten Elektromotor (11) anzusteuern, und
- die dritte Halbbrücke (15) in einer dritten Schaltsequenz (S3) zwischen der ersten Halbbrückenstellung (15-1), der zweiten Halbbrückenstellung (15-2) und/oder der dritten Halbbrückenstellung (15-3) geschaltet wird, um den zweiten Elektromotor (12) anzusteuern.

11. Verfahren nach Anspruch 9 oder 10, **dadurch gekennzeichnet, dass** die zweite Halbbrücke (14)
- für mehrere Periodendauern (T) der ersten Schaltsequenz (S1) in ihre zweite Halbbrückenstellung (14-2) geschaltet wird, um den ersten Elektromotor (11) in eine Drehrichtung (D1) anzutreiben und/oder
- für mehrere Periodendauern (T) der ersten Schaltsequenz (S1) in ihre erste Halbbrückenstellung (14-1) geschaltet wird, um den ersten Elektromotor (11) in eine entgegengesetzte Drehrichtung (D2) anzutreiben,
und/oder dass die dritte Halbbrücke (15)
- für mehrere Periodendauern (T) der ersten Schaltsequenz (S1) in ihre erste Halbbrückenstellung (15-1) geschaltet wird, um den zweiten Elektromotor (12) in eine Drehrichtung (D3) anzutreiben und/oder
- für mehrere Periodendauern (T) der ersten Schaltsequenz (S1) in ihren zweite Halbbrückenstellung (15-2) geschaltet wird, um den zweiten Elektromotor (12) in eine entgegengesetzte Drehrichtung (D4) anzutreiben.

12. Verfahren nach einem der Ansprüche 8 bis 11, **dadurch gekennzeichnet, dass** die zweite Halbbrücke (14)
- um den ersten Elektromotor (11) in eine Drehrichtung (D1) anzutreiben periodisch in ihre zweite Halbbrückenstellung (14-2) geschaltet wird und diese jeweils mindestens für eine dritte Pulsdauer (P3) einnimmt, während derer sich die erste Halbbrücke (13) in ihrer ersten Halbbrückenstellung (13-1) befindet, und/oder
- um den ersten Elektromotor (11) in eine entgegengesetzte Drehrichtung (D2) anzutreiben periodisch in ihre erste Halbbrückenstellung (14-1) geschaltet wird und diese jeweils mindestens für eine vierte Pulsdauer (P4) einnimmt, während derer sich die erste Halbbrücke (13) in ihrer zweiten Halbbrückenstellung (13-2) befindet,
und/oder dass die dritte Halbbrücke (15)
- um den zweiten Elektromotor (12) in eine Drehrichtung (D3) anzutreiben periodisch in ihre erste Halbbrückenstellung (15-1) geschaltet wird und diese jeweils mindestens für eine fünfte Pulsdauer (P5) einnimmt, während derer sich die erste Halbbrücke (13) in ihrer zweiten Halbbrückenstellung (13-2) befindet, und/oder
- um den zweiten Elektromotor (12) in eine entgegengesetzte Drehrichtung (D4) anzutreiben periodisch in ihre zweite Halbbrückenstellung (15-2) geschaltet wird und diese jeweils mindestens für eine sechste Pulsdauer (P6) einnimmt, während derer sich die erste Halbbrücke (13) in ihrer ersten Halbbrückenstellung (13-1) befindet.

13. Verfahren nach einem der Ansprüche 9 bis 12, **dadurch gekennzeichnet, dass** (a) ein Verhältnis der ersten Pulsdauer (P1) zu der zweiten Pulsdauer (P2) im Bereich von 0,9 bis 1,1 liegt und/oder (b)
- ein Verhältnis der ersten Pulsdauer (P1) zu einer Periodendauer (T) der ersten Schaltsequenz (S1) und/oder
- ein Verhältnis der zweiten Pulsdauer (P2) zu der Periodendauer (T) der ersten Schaltsequenz (S1)
im Bereich von 0,4 bis 0,6 liegt.

14. Verfahren nach einem der Ansprüche 8 bis 13, **dadurch gekennzeichnet, dass** zum Ermöglichen eines aktiven Freilaufs die zweite Halbbrücke (14) und/oder die dritte Halbbrücke (15)
- periodisch in ihre erste Halbbrückenstellung (14-1, 15-1) geschaltet wird und diese einnimmt, während sich die erste Halbbrücke (13) in ihrer ersten Halbbrückenstellung (13-1) befindet, und/oder
- periodisch in ihre zweite Halbbrückenstellung (14-2, 15-2) geschaltet wird und diese einnimmt, während sich die erste Halbbrücke (13) in ihrer zweiten Halbbrückenstellung (13-2) befindet.

15. Verfahren nach einem der Ansprüche 8 bis 14, **dadurch gekennzeichnet,**
- **dass** zum Umschalten der Halbbrücken (13, 14, 15) aus ihrer jeweiligen ersten Halbbrückenstellung (13-1, 14-1, 15-1) in ihre jeweilige zweite Halbbrückenstellung (13-2, 14-2, 15-2) die jeweilige Halbbrücke (13, 14, 15) zunächst aus ihrer ersten Halbbrückenstellung (13-1, 14-1, 15-1) in ihre dritte Halbbrückenstellung (13-3 14-3, 15-3) und anschließend aus ihrer dritten Halbbrückenstellung (13-3 14-3, 15-3) in ihre zweite Halbbrückenstellung (13-2, 14-2, 15-2) geschaltet wird, und
- **dass** zum Umschalten der Halbbrücken (13, 14, 15) aus ihrer jeweiligen zweiten Halbbrückenstellung (13-2, 14-2, 15-2) in ihren jeweilige erste Halbbrückenstellung (13-1, 14-1, 15-1) die jeweilige Halbbrücke (13, 14, 15) zunächst aus ihrer zweiten Halbbrückenstellung (13-2, 14-2, 15-2) in ihre dritte Halbbrückenstellung (13-3 14-3, 15-3) und anschließend aus ihrer dritten Halbbrückenstellung (13-3 14-3, 15-3) in ihre erste Halbbrückenstellung (13-1, 14-1, 15-1) geschaltet wird.
